# FASCICULE DE BREVET EUROPEEN

(11) **EP 0 573 322 B1**
(45) Date de publication et mention de la délivrance du brevet: **24.07.1996**
(21) Numéro de dépôt: 93401232.9
(22) Date de dépôt: 13.05.1993
(51) Int. Cl.: F02F 1/42, F02B 31/00

(54) **Dispositif d'admission pour un moteur à combustion interne**
Ansaugsystem für eine Brennkraftmaschine
Intake system for an internal combustion engine

(30) Priorité: 05.06.1992 FR 9206863
(43) Date de publication de la demande: 08.12.1993
(73) Titulaire: AUTOMOBILES PEUGEOT, F-75116 Paris (FR); AUTOMOBILES CITROEN, F-92200 Neuilly sur Seine (FR)
(72) Inventeur: Chapelle, Christian, F-95150 Taverny (FR); Lefevre, Félix, F-69480 Lucenay par Anse (FR); Duceux, Jean-François, F-69005 Lyon (FR)
(74) Mandataire: Polus, Camille

(56) Documents cités:
- DE-A- 2 853 576
- DE-A- 2 854 332
- PATENT ABSTRACTS OF JAPAN vol. 011, no. 140 (M-586) 8 Mai 1987 & JP-A-61 277 815 (ISHIKAWAJIMA SHIBAURA KIKAI) 8 Décembre 1986
- PATENT ABSTRACTS OF JAPAN vol. 010, no. 375 (M-545) 13 Décembre 1986 & JP-A-61 167 121 (MAZDA MOTOR CORP.) 28 Juillet 1986
- PATENT ABSTRACTS OF JAPAN vol. 011, no. 199 (M-602) 26 Juin 1987 & JP-A-62 023 528 (TOYOTA MOTOR CORP.) 31 Janvier 1987

## Description

La présente invention concerne un dispositif d'admission pour un moteur à combustion interne.

L'invention concerne notamment un agencement d'un dispositif d'admission pour un moteur à plusieurs soupapes par cylindre, par exemple du type diesel à injection directe.

Afin d'obtenir le meilleur rendement possible pour un moteur à combustion interne, il est notamment nécessaire de pouvoir obtenir un niveau élevé de turbulence dans la chambre de combustion de chaque cylindre pour des régimes de rotation faibles du moteur sans toutefois dégrader de manière trop importante la perméabilité des conduits d'admission pour les hauts régimes de rotation, c'est-à-dire l'aptitude à l'écoulement aisé d'un débit maximal de gaz d'admission dans ces conduits.

Dans ce but, il a déjà été proposé un agencement selon lequel chaque cylindre comporte au moins deux soupapes d'admission agencées chacune dans un conduit d'admission dont l'un débouche dans la chambre de combustion du cylindre selon une direction sensiblement tangentielle de manière à provoquer un mouvement tourbillonnaire des gaz d'admission. L'autre conduit d'admission débouche selon une direction sensiblement radiale et il est équipé en amont d'au moins un volet d'obturation qui permet de commander le débit des gaz dans ce conduit et notamment de l'interrompre pour les faibles régimes de rotation du moteur afin que le flux des gaz débouchant de ce conduit ne vienne pas perturber l'effet tourbillonnaire engendré par le flux des gaz débouchant tangentiellement dans la chambre de combustion interne.

Un agencement de ce type est par exemple décrit et représenté dans le document US-A-4.354.463 dans lequel les conduits d'admission s'étendent dans la culasse sensiblement côte à côte, ce qui ne permet pas d'optimiser les directions souhaitées de pénétration des gaz d'admission dans la chambre de combustion interne et ce qui ne permet notamment pas d'obtenir l'effet tourbillonnaire intense souhaité.

JP-A-61 167 121 décrit un dispositif d'admission pour un moteur à combustion interne comportant au moins deux soupapes d'admission.

Afin de remédier aux inconvénients exposés ci-dessus, l'invention propose un dispositif d'admission pour un moteur à combustion interne comportant au moins un cylindre dont la chambre de combustion est délimitée à sa partie supérieure par une culasse qui est agencée au-dessus du cylindre et qui comporte deux conduits d'admission dont chacun s'étend depuis un seul orifice d'entrée, formé dans une face latérale de la culasse sensiblement parallèle à l'axe du cylindre, en direction de la chambre de combustion dans laquelle il débouche par un seul orifice de sortie formé au droit de la tête d'une soupape d'admission associée et du type comportant un collecteur d'admission qui est adjacent à la face latérale de la culasse et qui comporte un premier canal relié à l'orifice d'entrée d'un premier des deux conduits de la culasse et équipé d'un volet du débit des gaz dans ce premier conduit, et un second canal relié à l'orifice d'entrée du second conduit d'admission de la culasse, la partie terminale de ce second conduit s'étendant selon une direction tangentielle sensiblement perpendiculaire à un plan contenant l'axe du cylindre et passant par le centre de l'orifice de sortie du second conduit et où les deux orifices de sortie des conduits d'admission sont situés respectivement d'un côté et de l'autre d'un plan de référence contenant l'axe du cylindre et perpendiculaire à ladite face latérale de la culasse, caractérisé en ce que la partie terminale du premier conduit s'étend selon une direction radiale contenue dans un plan qui contient l'axe du cylindre, et en ce que les centres des deux orifices d'entrée des conduits d'admission sont situés sensiblement sur une ligne parallèle à l'axe du cylindre.

Selon d'autres caractéristiques de l'invention :
- le second conduit d'admission s'étend sensiblement dans un plan horizontal perpendiculaire à l'axe du cylindre, et le centre de l'orifice d'entrée du second conduit est situé en-dessous du centre de l'orifice d'entrée du premier conduit ;
- la ligne sur laquelle sont situés les centres des deux orifices d'entrée est contenue dans un plan parallèle au plan de référence et est située par rapport à ce dernier du même côté que l'orifice de sortie du premier conduit d'admission ;
- le premier conduit d'admission s'étend depuis son orifice d'entrée jusqu'à sa partie terminale à proximité d'un plan vertical sensiblement parallèle au plan de référence ;
- la partie terminale du premier conduit d'admission s'étend selon une direction sensiblement parallèle à l'axe du cylindre ;
- les parties terminales des premier et second conduits d'admission s'étendent respectivement dans des plans parallèles entre eux.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique de dessus d'une portion de la culasse d'un moteur à combustion interne réalisé conformément aux enseignements de l'invention ;
- la figure 2 est une vue en section selon la ligne 2-2 de la culasse de la figure 1 à laquelle est adjointe une portion d'un collecteur d'admission ; et
- la figure 3 est une vue schématique illustrant la face latérale de droite de la culasse illustrée aux figures 1 et 2.

Sur les figures, on a illustré de manière schématique une culasse 10 qui est montée sur la face supérieure du bloc-cylindres 12 d'un moteur à combustion interne dont un cylindre 14 d'axe A est représenté.

La face inférieure 16 de la culasse 10 coopère avec le cylindre 14 et le piston (non représenté) pour délimiter la chambre de combustion 17 du cylindre.

L'admission des gaz d'admission dans la chambre de combustion est réalisée au moyen de deux conduits 1 et 2 formés dans la masse de la culasse 10.

Le premier conduit 1 s'étend depuis son orifice d'entrée E1 jusqu'à son orifice de sortie S1 formé dans la face inférieure de la culasse 10.

De même, le second conduit 2 s'étend depuis son orifice d'entrée E2 jusqu'à son orifice de sortie S2.

Les deux orifices d'entrée E1 et E2 sont formés dans une face latérale F de la culasse 10 qui est sensiblement parallèle à l'axe A du cylindre 14 et perpendiculaire à un plan de référence PO contenant l'axe A.

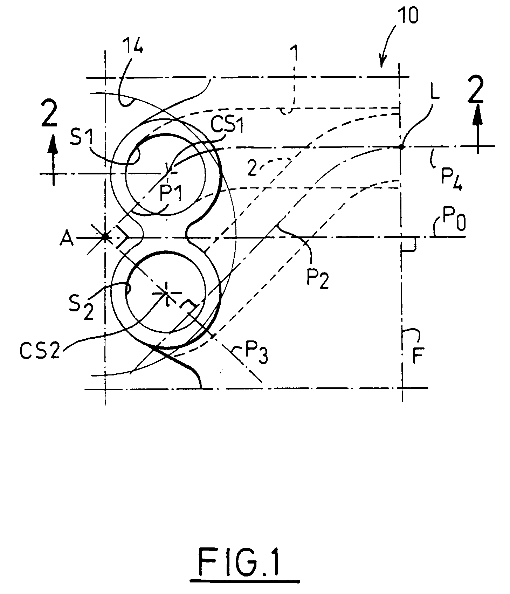

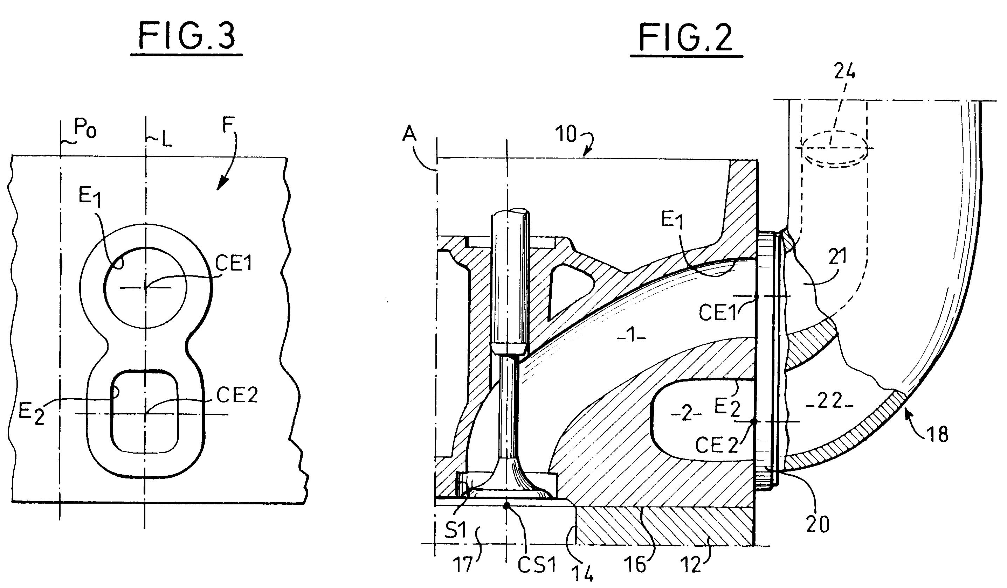

Comme on peut le constater aux figures 1 et 3, les centres CE1 et CE2 des orifices d'entrée E1 et E2 sont situés sur une même ligne verticale L qui est contenue dans un plan P4 parallèle au plan de référence PO et décalée latéralement par rapport à celui-ci.

Le centre CS1 et CS2 des orifices de sortie S1 et S2 sont agencés sensiblement symétriquement de part et d'autre du plan de référence PO.

La première partie, ou partie d'amont, du premier conduit 1, s'étend depuis l'orifice d'entrée E1 sensiblement dans le plan vertical P4.

La partie terminale, ou partie d'aval, du premier conduit 1 s'étend selon une direction radiale contenue dans un plan P1 qui contient l'axe A du cylindre 14.

Comme on peut le voir à la figure 2, la partie terminale du premier conduit 1 s'étend selon une direction verticale sensiblement parallèle à l'axe A du cylindre de manière à déboucher dans la chambre de combustion interne parallèlement à cet axe.

Le second conduit d'admission 2 s'étend globalement sensiblement dans un plan horizontal perpendiculaire à l'axe A du cylindre 14.

Depuis son orifice d'entrée E2 situé en-dessous de l'orifice d'entrée E1, le second conduit d'admission 2 s'incurve, traverse le plan de référence PO et se termine par une partie terminale qui s'étend selon une direction contenue dans un plan P2 qui est perpendiculaire à un plan P3 contenant l'axe A du cylindre 14.

La partie terminale du second conduit d'admission 2 débouche ainsi de manière sensiblement tangentielle à l'intérieur de la chambre de combustion pour y provoquer un effet tourbillonnaire.

Les plans P1 et P2 dans lesquels s'étendent respectivement les directions des parties terminales des premier et second conduits d'admission 1 et 2 sont sensiblement parallèles entre eux.

Selon un agencement connu, la culasse 10 est associée à un collecteur d'admission 18 qui est fixé, par exemple au moyen d'une bride 20 sur la face latérale F de la culasse et qui comporte un premier canal 21 et un second canal 22.

Un dispositif d'obturation commandé, par exemple du type à volet 24 est agencé dans le premier canal 21 dont la sortie est reliée à l'orifice d'entrée E1 du premier conduit d'admission.

La sortie du second canal 22 est reliée à l'orifice d'entrée E2 du second conduit d'admission 2.

Le dispositif à volet 24 est par exemple commandé au moyen d'un moteur pas à pas dont la rotation est pilotée par un dispositif de commande électronique en fonction par exemple d'une cartographie d'admission et d'allumage, en particulier de manière à être fermé pour les faibles régimes de rotation ou les faibles charges du moteur pour lesquels il est souhaitable de privilégier le passage des gaz d'admission dans le second conduit d'admission 2 de manière qu'ils pénètrent dans la chambre de combustion avec un effet tourbillonnaire important.

L'invention trouve tout particulièrement à s'appliquer dans un moteur à quatre soupapes par cylindre, par exemple du type diesel à injection directe, où les soupapes d'admission sont très excentrées par rapport à l'axe du cylindre.

## Revendications

1. Dispositif d'admission pour un moteur à combustion interne comportant au moins un cylindre (14) dont la chambre de combustion est délimitée à sa partie supérieure par une culasse (10) qui est agencée au-dessus du cylindre (14) et qui comporte deux conduits d'admission (1, 2) dont chacun s'étend depuis un seul orifice d'entrée (E1, E2), formé dans une face latérale (F) de la culasse (10) sensiblement parallèle à l'axe (A) du cylindre (14), en direction de la chambre de combustion dans laquelle il débouche par un seul orifice de sortie (S1, S2) formé au droit de la tête d'une soupape d'admission associée et du type comportant un collecteur d'admission (18) qui est adjacent à la face latérale (F) de la culasse (10) et qui comporte un premier canal (21) relié à l'orifice d'entrée (E1) d'un premier (1) des deux conduits (1, 2) de la culasse (10) et équipé d'un volet (24) de commande du débit des gaz dans ce premier conduit (1), et un second canal (22) relié à l'orifice d'entrée (E2) du second conduit d'admission (2) de la culasse (10), la partie terminale de ce second conduit s'étendant selon une direction tangentielle (P2) sensiblement perpendiculaire à un plan (P3) contenant l'axe (A) du cylindre (14) et passant par le centre (CS2) de l'orifice de sortie (S2) du second conduit (2) et où les deux orifices de sortie (S1, S2) des conduits d'admission (1, 2) sont situés respectivement d'un côté et de l'autre d'un plan de référence (PO) contenant l'axe (A) du cylindre (14) et perpendiculaire à ladite face latérale (F) de la culasse (10), caractérisé :
a) en ce que la partie terminale du premier conduit (1) s'étend selon une direction radiale contenue dans un plan (P1) qui contient l'axe (A) du cylindre (14), et
b) en ce que les centres (CE1, CE2) des deux orifices d'entrée (E1, E2) des conduits d'admission (1, 2) sont situés sensiblement sur une ligne (L) parallèle à l'axe (A) du cylindre (14).

2. Dispositif d'admission selon la revendication 1, caractérisé en ce que le second conduit d'admission (2) s'étend sensiblement dans un plan horizontal perpendiculaire à l'axe (A) du cylindre, et en ce que le centre (CE2) de l'orifice d'entrée (E2) du second conduit (2) est situé en-dessous du centre (CE1) de l'orifice d'entrée (E1) du premier conduit d'admission (1).

3. Dispositif d'admission selon la revendication 2, caractérisé en ce que la ligne (L) sur laquelle sont situés les centres (CE1, CE2) des deux orifices d'entrée (E1, E2) des conduits d'admission est contenue dans un plan (P4) parallèle au plan de référence (PO) et est située par rapport à ce dernier du même côté que l'orifice de sortie (S1) du premier conduit (1).

4. Dispositif d'admission selon la revendication 3, caractérisé en ce que le premier conduit d'admission (1) s'étend depuis son orifice d'entrée (E1) jusqu'à sa dite partie terminale dans un plan vertical (P4) sensiblement parallèle au plan de référence (PO).

5. Dispositif d'admission selon l'une quelconque des revendications précédentes, caractérisé en ce que la partie terminale du premier conduit d'admission (1) s'étend selon une direction sensiblement parallèle à l'axe (A) du cylindre (14).

6. Dispositif d'admission selon l'une quelconque des revendications précédentes, caractérisé en ce que les parties terminales des premier et second conduits d'admission (1, 2) s'étendent respectivement dans des plans (P1, P2) parallèles entre eux.

## Patentansprüche

1. Einlaßvorrichtung für einen Verbrennungsmotor, bestehend aus zumindest einem Zylinder (14), dessen Verbrennungskammer an ihrem Oberteil von einem Zylinderkopf (10) begrenzt wird, der über dem Zylinder (14) angeordnet ist und zwei Einlaßleitungen (1, 2) umfaßt, wobei jede von einer einzigen Eintrittsöffnung (E1, E2) aus, die in einer Seitenfläche (F) des Zylinderkopfes (10), die im wesentlichen zur Achse (A) des Zylinders (14) parallel ist, angeordnet ist, in Richtung der Verbrennungskammer verläuft, in die sie durch eine einzige Austrittsöffnung (S1, S2) mündet, welche rechts des Kopfes eines angeschlossenen Einlaßventils ausgebildet ist, und bestehend aus einem Ansaugkrümmer (18), der an die Seitenfläche (F) des Zylinderkopfes (10) angrenzt und einen ersten Kanal (21), der mit der Eintrittsöffnung (E1) einer ersten (1) der beiden Leitungen (1, 2) des Zylinderkopfes (10) verbunden ist und der mit einer Klappe (24) für die Steuerung des Gasdurchflusses in dieser ersten Leitung (1) versehen ist, und einen zweiten Kanal (22) umfaßt, der mit der Eintrittsöffnung (E2) der zweiten Einlaßleitung (2) des Zylinderkopfes (10) verbunden ist, wobei der Endteil dieser zweiten Leitung nach einer Tangentialrichtung (P2) verläuft, die im wesentlichen auf eine Ebene (P3) senkrecht steht, die die Achse (A) des Zylinders (14) enthält und durch den Mittelpunkt (CS2) der Austrittsöffnung (S2) der zweiten Leitung (2) geht, und wobei die beiden Austrittsöffnungen (S1, S2) der Eintrittsleitungen (1, 2) auf der einen bzw. der anderen Seite einer Bezugsebene (PO) angeordnet sind, die die Achse (A) des Zylinders (14) enthält und auf die Seitenfläche (F) des Zylinderkopfes (10) senkrecht steht, dadurch gekennzeichnet,
a) daß der Endteil der ersten Leitung (1) nach einer Radialrichtung verläuft, die in einer Ebene (P1) enthalten ist, die die Achse (A) des Zylinders (14) enthält, und
b) daß die Mittelpunkte (CE1, CE2) der beiden Eintrittsöffnungen (E1, E2) der Einlaßleitungen (1, 2) im wesentlichen auf einer Linie (L) angeordnet sind, die zur Achse (A) des Zylinders (14) parallel ist.

2. Einlaßvorrichtung nach Anspruch 1, dadurch gekennzeichnet, daß die zweite Einlaßleitung (2) im wesentlichen in einer Horizontalebene verläuft, die auf die Achse (A) des Zylinders senkrecht steht, und daß der Mittelpunkt (CE2) der Eintrittsöffnung (E2) der zweiten Leitung (2) unterhalb des Mittelpunktes (CE1) der Eintrittsöffnung (E1) der ersten Einlaßleitung (1) angeordnet ist.

3. Einlaßvorrichtung nach Anspruch 2, dadurch gekennzeichnet, daß die Linie (L), auf der sich die Mittelpunkte (CE1, CE2) der beiden Eintrittsöffnungen (E1, E2) der Einlaßleitungen befinden, in einer Ebene (P4) enthalten ist, die zur Bezugsebene (PO) parallel ist und in bezug auf letztgenannte auf derselben Seite wie die Austrittsöffnung (S1) der ersten Leitung (1) angeordnet ist.

4. Einlaßvorrichtung nach Anspruch 3, dadurch gekennzeichnet, daß die erste Einlaßleitung (1) von ihrer Einlaßöffnung (E1) aus bis zu ihrem Endteil in einer Vertikalebene (P4) verläuft, die im wesentlichen parallel zur Bezugsebene (PO) ist.

5. Einlaßvorrichtung nach einem der vorhergehenden Ansprüche, dadurch gekennzeichnet, daß der Endteil der ersten Einlaßleitung (1) entlang einer Richtung verläuft, die im wesentlichen zur Achse (A) des Zylinders (14) parallel ist.

6. Einlaßvorrichtung nach einem der vorhergehenden Ansprüche, dadurch gekennzeichnet, daß die Endteile der ersten und der zweiten Einlaßleitung (1, 2) in Ebenen (P1, P2) verlaufen, die zueinander parallel sind.

## Claims

1. Intake device for an internal combustion engine comprising at least one cylinder (14), the combustion chamber of which is bounded at its upper end by a cylinder head (10) which is arranged above the cylinder (14) and which comprises two intake ducts (1, 2), each of which extends from a single inlet port (E1, E2), formed in a lateral surface (F) of the cylinder head (10) substantially parallel to the axis (A) of the cylinder (14), towards the combustion chamber into which it opens through a single outlet port (S1, S2) formed in line with the head of an associated intake valve of the type comprising an intake collector (18) which is adjacent to the lateral surface (F) of the cylinder head (10) and which comprises a first channel (21) linked to the inlet port (E1) of a first (1) of the two ducts (1, 2) of the cylinder head (10) and fitted with a throttle valve (24) for controlling the flow rate of gases in this first duct (1), and a second channel (22) connected to the inlet port (E2) of the second intake duct (2) of the cylinder head (10), the end part of this second duct extending in a tangential direction (P2) substantially perpendicular to a plane (P3) containing the axis (A) of the cylinder (14) and passing through the centre (CS2) of the outlet port (S2) of the second duct (2) and where the two outlet ports (S1, S2) of the intake ducts (1, 2) are located, respectively, on each side of a reference plane (PO) containing the axis (A) of the cylinder (14) and perpendicular to said lateral surface (F) of the cylinder head (10), characterised in that:
a) the end part of the first duct (1) extends in a radial direction contained in a plane (P1) which contains the axis (A) of the cylinder (14), and
b) the centres (CE1, CE2) of the two inlet ports (E1, E2) of the intake ducts (1, 2) are located substantially on a line (L) parallel to the axis (A) of the cylinder (14).

2. Intake device according to claim 1, characterised in that the second intake duct (2) extends substantially in a horizontal plane perpendicular to the axis (A) of the cylinder, and in that the centre (CE2) of the inlet port (E2) of the second duct (2) is located below the centre (CE1) of the inletport (E1) of the first intake duct (1).

3. Intake device according to claim 2, characterised in that the line (L) on which the centres (CE1, CE2) of the two inlet ports (E1, E2) of the intake ducts lie is contained in a plane (P4) parallel to the reference plane (PO) and is situated on the same side, relative to the latter, as the outlet port (S1) of the first duct (1).

4. Intake device according to claim 3, characterised in that the first intake duct (1) extends from its inlet port (E1) up to said end part in a vertical plane (P4) substantially parallel to the reference plane (PO).

5. Intake device according to any one of the preceding claims, characterised in that the end part of the first intake duct (1) extends in a direction substantially parallel to the axis (A) of the cylinder (14).

6. Intake device according to any one of the preceding claims, characterised in that the end parts of the first and second intake ducts (1, 2) extend, respectively, in planes (P1, P2) which are parallel to each other.
